**Europäisches Patentamt**

**European Patent Office**

**Office européen des brevets**

(19)

(11) Veröffentlichungsnummer: **0 281 732 B1**

# EUROPÄISCHE PATENTSCHRIFT

(12)

(45) Veröffentlichungstag der Patentschrift: **22.05.91**

(51) Int. Cl.⁵: **A23G 9/16, A23G 9/30**

(21) Anmeldenummer: **88100734.8**

(22) Anmeldetag: **20.01.88**

(54) **Vorrichtung zum Herstellen von Speiseeis, Milchshake oder gefrorenen Süssspeisen aus einem fliessfähigen Ansatz.**

(30) Priorität: **11.03.87 DE 3707779**

(43) Veröffentlichungstag der Anmeldung:
**14.09.88 Patentblatt 88/37**

(45) Bekanntmachung des Hinweises auf die
Patenterteilung:
**22.05.91 Patentblatt 91/21**

(84) Benannte Vertragsstaaten:
**AT BE CH DE ES FR GB GR IT LI NL SE**

(56) Entgegenhaltungen:
**EP-A- 0 225 989      DE-A- 2 165 334**
**FR-A- 2 321 848      US-A- 2 737 024**
**US-A- 2 746 640      US-A- 3 183 681**
**US-A- 3 290 015      US-A- 4 045 976**

(73) Patentinhaber: **LUMEN GmbH Nährmittel- und
Maschinenfabrik
Petzmannsberg 11
W-8650 Kulmbach(DE)**

(72) Erfinder: **Menzel, Waldemar, Dr.
Eichenstrasse 11
W-8650 Kulmbach-Burghaig(DE)**

(74) Vertreter: **Rau, Manfred, Dr. Dipl.-Ing. et al
Rau & Schneck, Patentanwälte Königstrasse
2
W-8500 Nürnberg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung nach dem Oberbegriff des Anspruches 1.

Eine Vorrichtung der gattungsgemäßen Art ist aus der DE-C- 23 13 715 (entsprechend US-A- 3 930 535) bekannt. Bei dieser bekannten Vorrichtung fließt aus einem Vorratsbehälter der Ansatz, sogenanntes Eismix, durch den Zuführkanal in die Einlaufkammer des Kühl- und Gefrier-Zylinders. Dort wird in die Einlaufkammer eingedrückte Luft in den Ansatz eingeschlagen und dieses Eismix-Luft-Gemisch ausgefroren und dann als Speiseeis-Portion, insbesondere als sogenanntes Softeis, über ein Zapfventil entnommen. Der durch ein Rohr verhältnismäßig großen Querschnitts gebildete Zuführkanal mündet seitlich in die Einlaufkammer, so daß in dem Raum oberhalb der Auslaßöffnung des Zuführkanals sich Druckluft befindet. Hierüber erfolgt eine Nachlaufregelung. In dieser bekannten und gattungsgemäßen Vorrichtung erfolgt außerhalb des eigentlichen Eisherstellungsbetriebes ein Aufheizen des Eismixes im Kühl- und Gefrier-Zylinder und im Vorratsbehälter auf Pasteurisiertemperatur. Es hat sich gezeigt, daß aus der Einlaufkammer mit Luft angereicherter Eismix, der bereits teilweise ausgefroren ist, durch den Zuführkanal in den Vorratsbehälter aufsteigt und hier zu einer erheblichen Schaumbildung führt. Dies führt auch zu Betriebsstörungen, da der noch nicht mit Luft angereicherte Eismix nicht mehr ordnungsgemäß in die Einlaufkammer nachläuft, so daß beim Zapfen von Eisportionen die Luft durch das Zapfventil ausströmen kann.

Dieser Schaumbildung kann zwar durch geeignete Zusammensetzung des eingesetzten Ansatzes (Eismixes) teilweise begegnet werden. Wo die Zusammensetzung des Ansatzes nicht beeinflußbar ist, ist dies aber nicht möglich.

Aus der US-A-3 183 681 ist eine Vorrichtung zum Herstellen von Speiseeis bekannt, die einen Vorratsbehälter für Eismix und einen mit diesem über einen Zuführkanal verbundenen Kühl- und Gefrier-Zylinder aufweist. In letzterem ist ein drehantreibbares Rührwerk angeordnet. Es ist eine Pumpe vorgesehen, die über ein Mischventil einerseits Eismix und andererseits über ein Steigrohr Luft aus dem oberen Bereich des Vorratsbehälters ansaugt. Die Pumpe drückt dieses Luft-und Eismix-Gemisch durch ein Lippenventil in den Zuführkanal. Die anzusaugende Luft wird über einen Sterilfilter im Deckel des Vorratsbehälters angesaugt. Da das Lippenventil ein Rückschlagventil ist, kann kein Druckausgleich von der Einlaufkammer des Zylinders in den Vorratsbehälter erfolgen. Um zu verhindern, daß durch einen Rücklauf von bereits mit Luft angereichertem Eismix aus dem Gefrier-Zylinder in den Vorratsbehälter auf Dauer sich das Mischungsverhältnis von Luft und Eismix ändert, ist vorgesehen, daß die Pumpe in Abhängigkeit vom Druck im Gefrier-Zylinder selbsttätig ein- und ausschaltbar ist, wenn der Druck eine einstellbare Grenze unter- bzw. überschreitet. Eine Schaumbildung im Vorratsbehälter ist dadurch unterbunden, daß in den dort befindlichen Eismix überhaupt keine Luft gelangen kann, da weder Druckluft in den Gefrier-Zylinder eingeblasen wird, noch der Gefrier-Zylinder ständig mit dem Vorratsbehälter verbunden ist; vielmehr ist der Gefrier-Zylinder in Richtung zum Vorratsbehälter hermetisch von diesem abgeschlossen.

Aus der US-A-3 290 015 ist ein Eisbereiter bekannt, der einen nicht-gasdichten Vorratsbehälter aufweist, der über eine Zuführleitung mit einem Gefrier-Zylinder verbunden ist. In der Zuführleitung ist ein Mischventil vorgesehen, das in seinem unteren Bereich Öffnungen aufweist, die mittels eines Kolbens verschließbar sind. Wenn im Gefrier-Zylinder Atmosphärendruck herrscht, sind diese Öffnungen verschlossen. Wenn durch Entnahme von Portionen aus dem Gefrier-Zylinder in letzterem gegenüber Atmosphärendruck Unterdruck entsteht, dann werden diese Öffnungen freigegeben, so daß Eismix aus dem Vorratsbehälter nachfließen kann. Außerdem kann durch ein Unterdruckventil Luft aus der Atmosphäre in den Gefrier-Zylinder nachströmen, die dort in den Eismix eingeschlagen wird. Das Problem der Schaumbildung im Vorratsbehälter tritt hierbei nicht auf, da lediglich bei Unterdruck im Gefrier-Zylinder dieser mit dem Vorratsbehälter verbunden ist, während bei Druckgleichheit der Gefrier-Zylinder hermetisch vom Vorratsbehälter abgeschlossen ist.

Der Erfindung liegt daher die Aufgabe zugrunde, eine Vorrichtung der gattungsgemäßen Art so auszugestalten, daß eine Schaumbildung im Vorratsbehälter wirksam unterbunden wird.

Diese Aufgabe wird erfindungsgemäß durch die Merkmale im Kennzeichnungsteil des Anspruches 1 gelöst. Der Kern der Erfindung liegt darin, daß der Zuführkanal dann weitgehend verschlossen werden kann, wenn Vorratsbehälter und Zylinder unter Druck stehen, wenn also normaler Lufteinschlag-und Gefrier-Betrieb ist. Der Zuführkanal ist in diesem Fall so weit verschlossen, daß einerseits bereits teilweise ausgefrorenes, Lufteinschlüsse aufweisendes Eismix nicht in den Vorratsbehälter aufsteigen kann, daß ein Eismix-Nachlauf aber nicht gestört wird. Wenn dagegen die gesamte Vorrichtung drucklos gemacht wird, was zum Pasteurisieren geschieht, dann ist die Staueinrichtung geöffnet, so daß ein freier Umlauf bzw. Austausch von Eismix zwischen Zylinder und Vorratsbehälter möglich ist. Die Maßnahmen nach Anspruch 2 geben hier eine vorteilhafte Möglichkeit, den Zuführkanal weitgehend zu verschließen, wieder. Die Dimensionierung der Durchlaßöffnung nach den Ansprüchen 3 und 4, und zwar insbesondere nach Anspruch 4, hat sich als besonders zweckmäßig zur Erreichung eines störungsfreien Betriebs nach der erfindungsgemäßen Lehre erwiesen.

Konstruktiv und betriebstechnisch besonders einfach ist die Anordnung der Stauscheibe nach Anspruch 5. Die Ansprüche 6 und 7 geben das Grundprinzip an, wie das weitgehende Verschließen bzw. Öffnen des Zuführkanals mittels der Stauscheibe erfolgt.

Die Ansprüche 8 bis 13 geben eine besonders vorteilhafte Ausgestaltung eines Stauscheiben-Antriebs an, der die Wand des Vorratsbehälters nich mit einer Dreh-Verbindung durchsetzt und der unmittelbar auch von dem Druck der Luft angesteuert wird, die in den Eismix eingeschlagen wird.

Weitere Vorteile und Merkmale der Erfindung ergeben sich aus der Beschreibung eines Ausführungsbeispiels anhand der Zeichnung. Es zeigt

Fig. 1    eine Vorrichtung zum Herstellen von Speiseeis in schematischer Darstellung im vertikalen Längsschnitt,

Fig. 2    einen Querschnitt durch eine Vorrichtung gemäß der Schnittlinie II-II in Fig. 1, bei geschlossener Staueinrichtung,

Fig. 3    einen Teilausschnitt aus Fig. 2 bei geöffneter Staueinrichtung und

Fig. 4    eine Draufsicht auf einen Ringmagneten der Staueinrichtung.

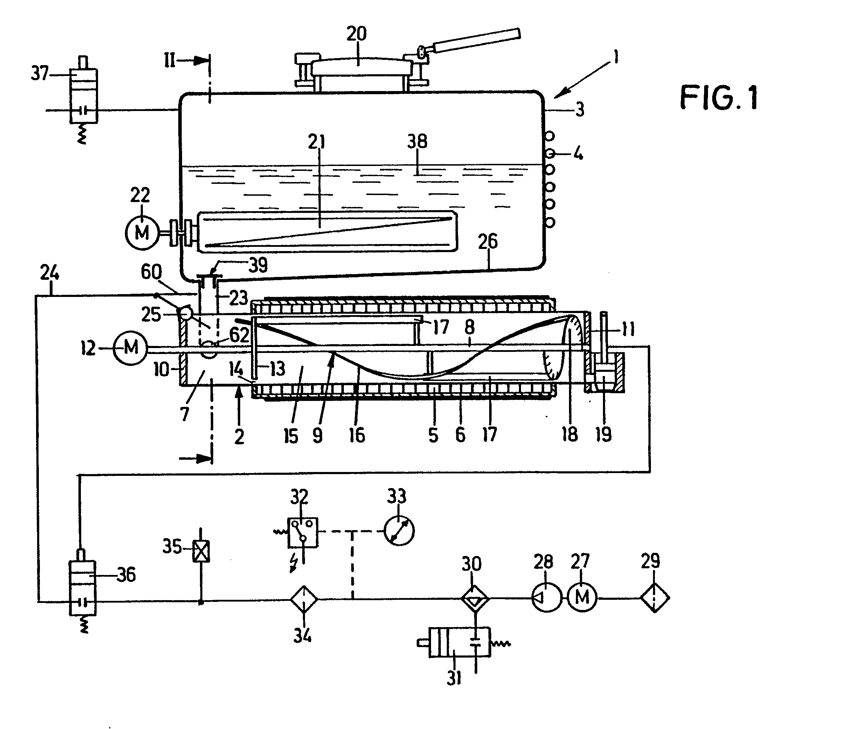

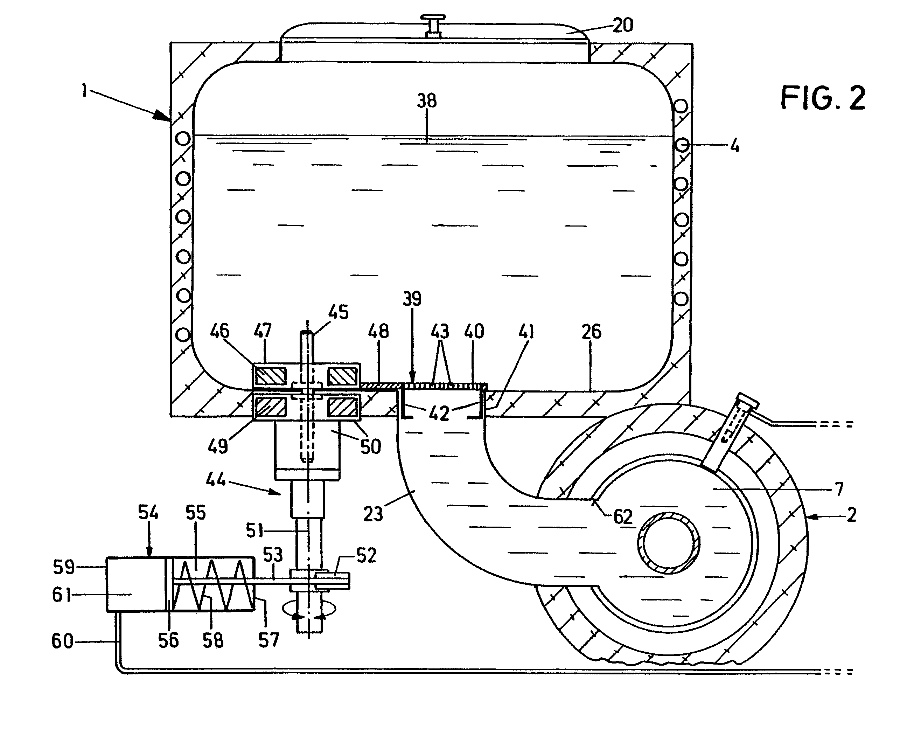

Obwohl Fig. 1 eine schematische Darstellung zeigt, während Fig. 2 eine ausgeprägter konstruktive Darstellung zeigt, werden in beiden Darstellungen dieselben Bezugsziffern verwendet, soweit es sich um gleiche Teile handelt.

Wie aus den Fig. 1 und 2 hervorgeht, ist - in allgemein üblicher Weise - ein Vorratsbehälter 1 oberhalb eines horizontalen Kühl- und Gefrier-Zylinders 2 angeordnet und bildet mit diesem weitgehend eine Einheit. Die Seitenwände 3 des Vorratsbehälters 1 sind mit einem Kühlrohr 4 versehen, das etwa schraubenförmig um die Seitenwände 3 verläuft.

Der Zylinder 2 ist mit einem Kühlmantel 5 umgeben, durch den ein Kältemittel gepumpt werden kann. Der Kühlmantel 5 selber ist wiederum von einem Heizmantel 6 umgeben. Kühlmantel 5 und Heizmantel 6 erstrecken sich weitgehend über die volle Länge des Zylinders 2 mit Ausnahme eines an einem - in Fig. 1 linken - Ende befindlichen Bereichs, in dem sich eine Einlaufkammer 7 des Zylinders 2 befindet. Der Zylinder 2 wird koaxial von einer Welle 8 eines Rühr- und Schabewerks 9 durchsetzt, die in endseitigen Stirnwänden 10, 11 des Zylinders 2 drehbar gelagert und aus einem - in Fig. 1 linken - Ende herausgeführt ist. Das Rühr- und Schabewerk 9 wird auf dieser Seite von einem Elektro-Motor 12 angetrieben.

Auf der Welle 8 ist eine Scheibe 13 angebracht, die nur einen sehr schmalen Spalt 14 zur Wand des Zylinders 2 freiläßt. Diese Scheibe 13 trennt die Einlaufkammer 7 von der eigentlichen Kühl- und/oder Gefrier-Kammer 15 im Zylinder 2, die von dem Kühlmantel 5 und dem Heizmantel 6 umgeben ist. In der Kammer 15 ist auf der Welle 8 eine schraubenlinienförmige Rührwendel 16 befestigt. An der Welle 8 sind außerdem zwei an der Innenwand des Zylinders 2 anliegende Schabeklingen 17 angebracht, die ständig den Eisansatz von der Innenwand des Zylinders 2 abschaben. Im Anschluß an die Rührwendel 16 ist auf der Welle 8 noch eine kurzgängige Schnecke 18 mit einem Schneckengang befestigt, die eine gewisse Stauwirkung gegenüber der Rührwendel 16 ausübt. Vor der dem Motor 12 entgegengesetzten Stirnwand 11 ist ein Zapfventil 19 angebracht. In der eine Zwischenwand bildenden Scheibe 13 kann eine die Einlaufkammer 7 mit der Kammer 15 verbindende Durchlaßöffnung ausgebildet sein.

Der Vorratsbehälter 1 und der Kühl- und Gefrier-Zylinder 2 sind druckfest ausgebildet. Der Vorratsbehälter 1 ist mittels eines druckfesten, luftdicht schließenden Deckels 20 verschlossen. Im Vorratsbehälter 1 ist ein - nur in Fig. 1 dargestellter - walzenförmiger Rührer 21 angeordnet, der von einem Elektro-Motor 22 antreibbar ist.

Aus dem Vorratsbehälter 1 mündet ein Zuführkanal 23 in die Einlaufkammer 7 des Zylinders 2, wobei dieser Zuführkanal 23 durch einen Rohrkrümmer verhältnismäßig großen Querschnitts gebildet wird, der etwa in Höhe der Welle 8 des Rühr- und Schabewerks 9 in die Einlaufkammer 7 mündet. Durch diesen Zuführkanal 23 kann zugeführte Druckluft auch in den Vorratsbehälter aufsteigen, weshalb dieser luftdicht und druckfest ausgebildet sein muß. Diese Luft wird über eine Luftleitung 24 in den oberen Bereich der Einlaufkammer 7 eingeführt. Um zu verhindern, daß Flüssigkeit und/oder Luft aus der Einlaufkammer 7 in die Luftleitung 24 zurückströmen kann, ist in dieser ein Rückschlagventil 25 vorgesehen, das beispielsweise durch ein sogenanntes Lippenventil gebildet sein kann. Der Luftleitung 24 wird Druckluft von einem durch einen Elektro-Motor 27 angetriebenen Kompressor 28 zugeführt, dem ein Luftfilter 29 vorgeordnet ist. Dem Kompressor 28 ist ein Druckluftentfeuchter 30 nachgeordnet.

Im Anschluß daran ist ein als Magnetventil ausgebildetes Ablaßventil 31 in die Luftleitung 24 geschaltet, mittels dessen das gesamte Druckluftsystem drucklos gemacht werden kann. Weiterhin ist in der Leitung 24 ein Drickwächter 32 angeordnet, der jeweils den Kompressor 28 einschaltet, wenn ein Mindestdruck in der Luftleitung 24 unterschritten wird. Dieser Mindestdruck kann beispielsweise bei 1,7 bar liegen. Der Kompressor schaltet wieder ab, wenn der Druck einen vorgebbaren Maximaldruck von beispielsweise 2,0 bar überschreitet. Der Luftdruck kann außerdem visuell mittels eines Druckanzeigegeräts 33 überwacht werden. Darüber hinaus ist in der Luftleitung 24 ein Druckluft-Sterilfilter 34 und ein Sicherheitsventil 35 vorgesehen.

Schließlich ist in der Luftleitung 24 noch ein Magnet-Ventil 36 angeordnet, das vom Zapfventil 19 betätigt wird. Wenn das Zapfventil 19 geöffnet ist, schließt das Magnet-Ventil 36, so daß keine Druckluft in die Einlaufkammer 7 gedrückt werden kann.

Im oberen Bereich des Vorratsbehälters 1 ist ein Ablaßventil 37 vorgesehen, das gleichermaßen wie das Ablaßventil 31 als Magnet-Ventil ausgebildet ist und das dazu dient, bei Betriebsunterbrechungen, beispielsweise zum Pasteurisieren oder Nachfüllen von Eismix 38 in den Vorratsbehälter 1 die gesamte Vorrichtung drucklos zu machen.

Wie nur aus Fig. 2 hervorgeht, ist am Boden 26 des Vorratsbehälters 1 eine Eismix-Staueinrichtung 39 vorgesehen. Diese weist eine Stauscheibe 40 auf, die auf die Einlaßöffnung 41 des Zuführkanals 23 abgesenkt bzw. von dieser nach oben abgehoben werden kann. Die Stauscheibe 40 weist an ihrer Unterseite Führungsstifte 42 auf, mittels derer sie beim Anheben oder Absenken in dem Zuführkanal 23 geführt wird. Diese Stauscheibe 40 weist Durchlaßöffnungen 43 von 1,0 bis 3,0 mm Durchmesser auf, wobei der Durchmesser eher im Bereich von 1,0 bis 1,5 mm liegt. Zum Anheben und Absenken der Stauscheibe 40 ist ein Stauscheiben-Antreib 44 vorgesehen. Dieser weist einen den Boden 26 des Vorratsbehälters 1 flüssigkeits- und gasdicht durchdringenden Zapfen 45 auf. Innerhalb des Vorratsbehälters 1 ist auf dem Zapfen 45 ein Ringmagnet 46 axial frei verschiebbar angeordnet, der von einem Mantel 47 aus unmagnetischem Material, beispielsweise hochlegiertem Edelstahl, eingehüllt ist. Dieser Ringmagnet 46 bzw. sein Mantel 47 ist mittels eines Verbindungssteges 48 mit der Stauscheibe 40 fest verbunden, so daß bei einem Anheben des Ringmagneten 46 auf dem Zapfen 45 die Stauscheibe 40 von der Einlaßöffnung 41 des Zuführkanals 23 abgehoben wird, während bei einem Absenken des Ringsmagneten 46 auf dem Zapfen 45 zum Boden 26 des Vorratsbehälters 1 hin die Stauscheibe 40 über die Einlaßöffnung 41 abgesenkt wird, so daß der Vorratsbehälter 1 mit dem Zuführkanal 23 und damit mit dem Kühl- und Gefrier-Zylinder nur noch durch die Durchlaßöffnungen 43 in der Stauscheibe 40 verbunden ist.

Auf der Außenseite des Vorratsbehälters ist auf dem Zapfen 45 wiederum ein mit dem Ringmagnet 46 identischer Ringmagnet 49 angeordnet, der in einem Gehäuse 50 um die Mittel-Längs-Achse 51 des Zapfens 45 schwenkbar, in dessen Längsrichtung aber unverschiebbar ist. An dem Gehäuse 50 greift über einen radial zur Achse 51 verlaufenden Schwenkhebel 52 eine Kolbenstange 53 eines pneumatisch beaufschlagbaren Kolben-Zylinder-Antrieb 54 an. Im Zylinder 55 dieses Antriebs 54 ist ein Kolben 56 verschiebbar angeordnet, an dem die Kolbenstange 53 mit ihrem dem Schwenkhebel 52 entgegengesetzten Ende befestigt ist. Zwischen dem Kolben 56 und der kolbenstangenaustrittsseitigen Stirnseite 57 des Zylinders 55 ist eine vorgespannte Schrauben-Druck-Rückstellfeder 58 angeordnet. Im Bereich der anderen Stirnseite 59 mündet die Luftleitung 24 mit einer Zweigleitung 60 in den zwischen dem Kolben 56 und dieser Stirnseite 59 gebildeten Druckraum 61 des Antriebs 54.

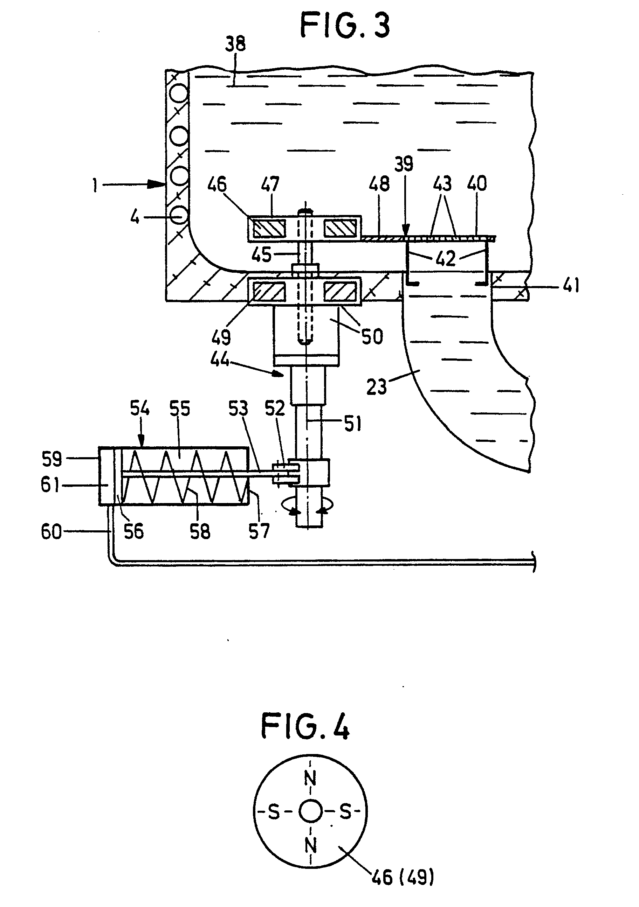

Wie aus Fig. 4 hervorgeht, sind die Ringmagnete 46, 49 4-polig, d.h. sie weisen in einem Abstand von 90° jeweils im Wechsel einen Nordpol N bzw. einen Südpol S auf.

In der in Fig. 2 dargestellten abgesenkten Stellung der Stauscheibe 40 befinden sich jeweils die Nordpole N des Ringmagneten 49 in Überdeckung mit den Südpolen S des Ringmagneten 46 und umgekehrt. Die beiden Ringmagnete 46, 49, bei denen es sich also um Permanent-Magnete handelt, ziehen sich also an.

Bei der in Fig. 3 dargestellten von der Einlaßöffnung 41 abgehobenen Stellung der Stauscheibe 40 befinden sich jeweils die Nordpole N und die Südpole S der beiden Ringmagnete 46 und 49 in Überdeckung, so daß sich die Ringmagnete 46, 49 abstoßen mit der Folge, daß die Stauscheibe 40 abgehoben wird. Die Führungsstifte 42 verhindern hierbei, daß bei einem Verdrehen des Ringmagnets 49 der Ringmagnet 46 mit der Stauscheibe 40 mitgedreht wird.

Die abgesenkte Stellung der Stauscheibe 40 ist dann gegeben, wenn der Druckraum 61 des Zylinders 55 mit Druckluft beaufschlagt ist, wenn also die gesamte Vorrichtung unter Druck steht. In diesem Falle verschwenkt der Kolben 56 aufgrund des im Druckraum 61 herrschenden Gasdrucks gegen die Kraft der Rückstellfeder 58 den Schwenkhebel 52 in die in Fig. 2 dargestellte Stellung, die bereits erläutert wurde. Bei einer Druckentlastung, bei der also das automatisch gesteuerte Druckluftsystem abgeschaltet sowie der Luftüberdruck aus dem Vorratsbehälter 1 und dem Kühl-und Gefrier-Zylinder 2 abgelassen wird, schiebt die Rückstellfeder 58 den Kolben 56 zurück und zieht die Kolbenstange 53 in den Zylinder 55 hinein, wodurch das Gehäuse 50 mit dem Ringmagnet 49 in die in Fig. 3 dargestellte Stellung verschwenkt wird. Diese Verschwenkbewegung geht entsprechend der Winkelteilung der Ringmagnete 46, 49 über 90° um die Achse 51.

Die Vorrichtung arbeitet wie folgt:

Bei normalem Betrieb ist der Vorratsbehälter 1 zumindest teilweise mit Eismix 38 gefüllt. Die Einlaufkammer 7 ist etwa bis zur Auslaßöffnung 62 des Zuführkanals 23, etwa also zu 2/3 mit Eismix gefüllt. Über das Rückschlagventil 25 wird die Einlaufkammer 7 unter einem Druck von etwa 2,0 bar gehalten. In der Kühl- und Gefrierkammer 15 befindet sich Eismix, in das Luft eingeschlagen ist und das zumindest teilweise ausgefroren ist. Die Stauscheibe 40 ist auf die Einlaßöffnung 41 des Zuführkanals 23 abgesenkt. Ein Aufsteigen von leicht ausgefrorenem, mit Luft angereichertem Eismix durch den Zuführkanal 23 in den Vorratsbehälter 1 wird durch die Stauscheibe 40 verhindert. Wenn Eisportionen durch Öffnen des Zapfventils 19 entnommen werden, dann schließt während dieser Öffnungszeit des Zapfventils 19 das Magnet-Ventil 36, so daß während dieser Zeitspanne keine Druckluft in die Einlaufkammer 7 nachströmt. Hierdurch wird verhindert, daß Druckluft direkt durch das Zapfventil 19 entweichen dann und damit das Portionieren stört.

Da das Zapfen einer Eisportion nur kurze Zeit in Anspruch nimmt, fällt während dieser Zeit der Druck im Druckraum 61 nicht so weit ab, daß die Stauscheibe 40 bereits angehoben wird. Selbst wenn dies kurzzeitig der Fall sein sollte, wäre dies nicht störend.

Nach der Entnahme einer oder mehrerer Eisportionen durch das Zapfventil 19 läuft aus dem Vorratsbehälter 1 wieder Eismix nach. Da durch das Rückschlagventil 25 wieder Druckluft zugeführt wird, steigt diese Druckluft durch den Zuführkanal 23 in den Vorratsbehälter 1, wodurch der Druck in diesem etwa gleich zum Druck in der Einlaufkammer 7 gehalten wird. Der Nachlauf des flüssigen Eismixes durch die Durchlaßöffnungen 43 der Stauscheibe ist ohne weiteres möglich. Das Aufsteigen der Druckluft in den Vorratsbehälter ist ebenfalls ohne weiteres möglich. Das Aufsteigen von mit Luft angereichertem, bereits leicht ausgefrorenem Eismix aus der Einlaufkammer 7 in den Vorratsbehälter 1 ist aber wirksam unterbunden. Obwohl der Zylinder 2 im Bereich der Einlaufkammer 7 weder mit einem Kühlmantel 5 noch mit einem Heizmantel 6 umgeben ist, wird der Eismix auch in der Einlaufkammer aufgrund der Wärmeleitung im Zylinder 2 während des normalen Betriebes so weit heruntergekühlt, daß er leicht ausgefroren wird. Während des normalen Gefrierbetriebes wird der mit Lufteinschlag versehene Eismix 38 in der Kähl- und Gefrier-Kammer 15 auf etwa minus 7°C gehalten. Gerade wenn größere Pausen zwischen der Entnahme von Portionen aus dem Zapfventil 19 auftreten, ist dieser Effekt unvermeidbar.

Zum Nachfüllen von Eismix in den Vorratsbehälter 1 und insbesondere zum Pasteurisieren des gesamten Eismixes 38 im Vorratsbehälter 1 und im Kühl- und Gefrier-Zylinder 2 wird die Gesamtvorrichtung drucklos gemacht durch Öffnen der Ablaßventile 31 und 37. Hierbei wird auch der Antrieb 54 drucklos, so daß die Stauscheibe 40 in der geschilderten Weise vom Stauscheiben-Antrieb 44 in die in Fig. 3 dargestellte von der Einlaßöffnung 41 abgehobene Stellung verbracht wird. Beim Heizen und Pasteurisieren ist dann ein freier Austausch des Eismixes 38 zwischen Vorratsbehälter 1 und Kühl- und Gefrier-Zylinder 2 möglich. Wenn - wie beim dargestellten Ausführungsbeispiel - ein Heizen des Eismixes 38 nur über den Heizmantel 6 im Bereich der Kühl- und Gefrier-Kammer 15 erfolgt, dann ist die Möglichkeit zum Öffnen der Staueinrichtung 39 durch Anheben der Stauscheibe 40 besonders wichtig, um einen ungehinderten thermischen Umfluß des Eismixes 38 zu ermöglichen. Aber auch wenn - wie bekannt - einerseits am Zylinder 2 und andererseits am Vorratsbehälter 1 voneinander getrennte Heizeinrichtungen vorgesehen sind, dann ist die geschilderte Staueinrichtung 39 von Bedeutung, damit durch einen Umfluß des Eismixes 38 vom Zylinder 2 in den Vorratsbehälter 1 und umgekehrt durch den Zuführkanal 23 sichergestellt ist, daß auch in diesem Pasteurisiertemperatur erreicht wird. Hinzu kommt bei einer solchen Ausgestaltung, daß die Heizung am Zylinder 2 immer eine höhere Leistung hat, als eine Heizung am Vorratsbehälter 1, da durch das Rühr- und Schabewerk 9 sichergestellt ist, daß an der Innenwand des Zylinders 2 Eismix 38 nicht anbrennen kann. Ein solcher unerwünschter Effekt kann im Vorratsbehälter 1 bei dessen Beheizung nur dadurch erreicht werden, daß die Heizung entsprechend schwächer ist.

Wenn bei der Beschreibung des Ausführungsbeispieles nicht der Begriff Ansatz sondern Eismix 38 verwendet wurde, so heißt dies doch, daß andere Ansätze eingesetzt werden können, beispielsweise für Milchshake-Getränke, oder gefrorene Süßspeisen. Auch Milchshake-Getränke weisen einen Lufteinschlag von etwa 80% Luft, bezogen auf das Ausgangsvolumen des Ansatzes für das Milchshake-Getränk auf. Bei gefrorenen Süßspeisen ist der Lufteinschlag oft noch höher.

## Ansprüche

1. Vorrichtung zum Herstellen von Speiseeis, Milchshake oder gefrorenen Süßspeisen aus einem fließfähigen Ansatz, bestehend aus einem gasdicht verschließbaren Vorratsbehälter (1) für den Ansatz und einem mit diesem über einen Zuführkanal (23) verbundenen Kühl-und Gefrier-Zylinder (2), in dem ein drehantreibbares Rühr- und Schabewerk (9) angeordnet ist, wobei der Zuführkanal (23) in eine an einem Ende des Zylinders (2) befindliche Einlaufkammer (7) einmündet, wobei am anderen Ende des Zylinders (2) ein Zapfventil (19) vorgesehen ist, wobei Einrichtungen zum Transport des Ansatzes von der Einlaufkammer (7) zum Zapfventil (19) vorgesehen sind und wobei in die Einlaufkammer (7) eine Luftleitung (24) zur Druckluftbeaufschlagung des Zylinders (2) und des Vorratsbehälters (1) einmündet, dadurch gekennzeichnet, daß dem Zuführkanal (23) eine Staueinrichtung (39) zugeordnet ist, die den Zuführkanal (23) bei Druck in der Luftleitung (24) weitgehend verschließt und bei Drucklosigkeit in der Luftleitung (24) öffnet.

2. Vorrichtung nach Anspruch 1, dadurch gekennzeichnet, daß die Staueinrichtung (39) eine den Zuführkanal (23) zumindest weitgehend abdeckende Stauscheibe (40) mit Durchlaßöffnungen (43) aufweist.

3. Vorrichtung nach Anspruch 2, dadurch gekennzeichnet, daß die Durchlaßöffnungen (43) einen Durchmesser von 0,5 bis 3,0 mm haben.

4. Vorrichtung nach Anspruch 3, dadurch gekennzeichnet, daß die Durchlaßöffnungen (43) einen Durchmesser von 1,0 bis 1,5 mm aufweisen.

5. Vorrichtung nach Anspruch 2, dadurch gekennzeichnet, daß die Stauscheibe (40) in der Einlaßöffnung (41) des Zuführkanals (23) im Vorratsbehälter (1) angeordnet ist.

6. Vorrichtung nach Anspruch 5, dadurch gekennzeichnet, daß die Stauscheibe (40) von der Einlaßöffnung (41) in den Vorratsbehälter (1) hinein abhebbar ist.

7. Vorrichtung nach Anspruch 6, dadurch gekennzeichnet, daß die Stauscheibe (40) durch einen linear wirkenden Stauscheiben-Antrieb (44) von der Einlaßöffnung (41) abhebbar ist bzw. auf diese absenkbar ist.

8. Vorrichtung nach Anspruch 7, dadurch gekennzeichnet, daß an der Stauscheibe (40) ein im Vorratsbehälter (1) befindlicher Permanent-Magnet (46) angebracht ist, und daß diesem ein Permanent-Magnet (49) außerhalb des Vorratsbehälters (1) zugeordnet ist, der durch Lageveränderung den im Vorratsbehälter befindlichen Permanent-Magneten (46) abstößt oder anzieht.

9. Vorrichtung nach Anspruch 8, dadurch gekennzeichnet, daß an der Stauscheibe (40) ein mehrpoliger Ringmagnet (46) undrehbar aber in Richtung seiner Mittel-Achse (51) zusammen mit der Stauscheibe (40) verschiebbar angeordnet ist und daß außerhalb des Vorratsbehälters (1) ein Ringmagnet (49) um die gemeinsame Mittel-Achse (51) drehbar aber in deren Längsrichtung unverschiebbar angeordnet ist.

10. Vorrichtung nach Anspruch 9, dadurch gekennzeichnet, daß die Stauscheibe (40) relativ zum Zuführkanal (23) nur in dessen Längsrichtung verschiebbar ist.

11. Vorrichtung nach Anspruch 9, dadurch gekennzeichnet, daß der Stauscheiben-Antrieb (44) als an die Luftleitung (24) angeschlossener Kolben-Zylinder-Antrieb (54) ausgebildet ist, dessen Kolben (56) auf einer Seite vom Druck in der Luftleitung (24) und auf seiner anderen Seite von einer Rückstellfeder (58) beaufschlagt ist.

12. Vorrichtung nach Anspruch 11, dadurch gekennzeichnet, daß der Kolben (56) des Kolben-Zylinder-Antriebs (54) über seine Kolbenstange (53) und einen Schwenkhebel (52) mit dem außerhalb des Vorratsbehälters (1) befindlichen Ringmagneten (49) verbunden ist.

13. Vorrichtung nach Anspruch 9, dadurch gekennzeichnet, daß die Ringmagnete (46, 49) 4-polig ausgebildet sind.

## Claims

1. Apparatus for producing ice cream, milk shakes or frozen desserts from a flowable formulation and consisting of a gas-tightly closable storage container (1) for the formulation and, connected to it by a feed pipe (23), a cooling and freezing cylinder (2) in which there is a rotatingly drivable agitating and scraping mechanism (9), the feed pipe (23) terminating in an inlet chamber (7) disposed at one end of the cylinder (2), there being at the other end of the cylinder (2) a tap-valve (19), means being provided for transporting the formulation from the inlet chamber (7) to the tap-valve (19), an air line (24) discharging into the inlet chamber (7) in order to apply compressed air to the cylinder (2) and the storage container (1), characterised in that there is associated with the feed pipe (23) a retaining means (39) which substantially seals off the feed pipe (23) when there is pressure in the air line (24) and opens it when the pressure in the air line (24) fails.

2. Apparatus according to Claim 1, characterised in that the retaining means (39) comprises, at least substantially covering the feed pipe (23), an orifice plate (40) having apertures (43).

3. Apparatus according to Claim 2, characterised in that the apertures (43) have a diameter of 0.5 to 3 mm.

4. Apparatus according to Claim 3, characterised in that the apertures (43) have a diameter of 1 to 1.5 mm.

5. Apparatus according to Claim 2, characterised in that the orifice plate (40) is disposed in the inlet aperture (41) to the feed pipe (23) in the storage container (1).

6. Apparatus according to Claim 5, characterised in that the orifice plate (40) can be raised from the inlet aperture (41) into the storage container (1).

7. Apparatus according to Claim 6, characterised in that the orifice plate (40) can be lifted up from or lowered onto the inlet aperture (41) by a linearly acting orifice plate drive (44).

8. Apparatus according to Claim 7, characterised in that a permanent magnet (46) disposed in the storage container (1) is provided on the orifice plate (40) and in that there is associated with it, outside the storage container (1), a permanent magnet (49) which, by varying its position, repels or attracts the permanent magnet (46) which is present in the storage container.

9. Apparatus according to Claim 8, characterised in that there is on the orifice plate (40) a multipole ring magnet (46) which is non-rotatable but displaceable together with the orifice plate (40) and in the direction of its central axis (51) and in that outside the storage container (1) there is a ring magnet (49) rotatable about the common central axis (51) but non-displaceable in the longitudinal direction thereof.

10. Apparatus according to Claim 9, characterised in that the orifice plate (40) is displaceable relative to but only in the longitudinal direction of the feed pipe (23).

11. Apparatus according to Claim 9, characterised in that the orifice plate drive (44) is constructed as a piston-cylinder drive (54) connected to the air line (24) and of which the piston (56) is subject on one side to the pressure in the air line (24) and on the other to the action of a restoring spring (58).

12. Apparatus according to Claim 11, characterised in that the piston (56) of the piston-cylinder drive (54) is connected by its piston rod (53) and a pivot lever (52) to the ring magnet (49) disposed outside the storage container (1).

13. Apparatus according to Claim 9, characterised in that the ring magnets (46, 49) are constructed as 4-pole magnets.

**Revendications**

1. Appareil pour la fabrication de glace comestible, de milk-shake ou de desserts congelés à partir d'un mélange de base susceptible de s'écouler, comprenant un réservoir (1) pour le mélange de base, pouvant être fermé de manière étanche aux gaz, et, relié au réservoir par l'intermédiaire d'un canal d'alimentation (23), un cylindre de refroidissement et de congélation (2) dans lequel est monté un ensemble mélangeur-racleur (9) pouvant être entraîné en rotation, le canal d'alimentation (23) débouchant dans une enceinte d'entrée (7) située à l'une des extrémités du cylindre (2), un robinet de soutirage (19) étant prévu à l'autre extrémité du cylindre (2), des dispositifs étant prévus pour le transport du mélange de base de l'enceinte d'entrée (7) au robinet de soutirage (19), et une conduite d'air (24), destinée à alimenter en air comprimé le cylindre (2) et le réservoir (1), débouchant dans l'enceinte d'entrée (7), appareil caractérisé en ce qu'au canal d'alimentation (23) est associé un dispositif de retenue (39) qui obture dans une large mesure le canal d'alimentation (23) en présence d'une pression dans la conduite d'air (24), et ouvre le canal en cas d'absence de pression dans la conduite d'air (24).

2. Appareil selon la revendication 1, caractérisé en ce que le dispositif de retenue (39) comporte un disque de retenue (40) avec des orifices de passage (43), qui recouvre, tout au moins dans une large mesure, le canal d'alimentation (23).

3. Appareil selon la revendication 2, caractérisé en ce que les orifices de passage (43) présentent un diamètre de 0,5 à 3,0 mm.

4. Appareil selon la revendication 3, caractérisé en ce que les orifices de passage (43) présentent un diamètre de 1,0 à 1,5 mm.

5. Appareil selon la revendication 2, caractérisé en ce que le disque de retenue (40) est disposé dans l'ouverture d'entrée (41) du canal d'alimentation (23), dans le réservoir (1).

6. Appareil selon la revendication 5, caractérisé en ce que le disque de retenue (40) peut être soulevé de l'ouverture d'entrée (41) vers l'intérieur du réservoir (1).

7. Appareil selon la revendication 2, caractérisé en ce que le disque de retenue (40) peut être soulevé de l'ouverture d'entrée (41) ou abaissé sur celle-ci, au moyen d'un entrainement de disque de retenue (44) à action linéaire.

8. Appareil selon la revendication 7, caractérisé en ce qu'un aimant permanent (46) situé dans le réservoir (1) est fixé sur le disque de retenue (40), et en ce qu'à cet aimant est associé, en-dehors du réservoir (1), un aimant permanent (49) qui, par changement de position, attire ou repousse l'aimant permanent (46) se trouvant dans le réservoir.

9. Appareil selon la revendication 8, caractérisé en ce que sur le disque de retenue (40), est monté, non tournant mais de manière à pouvoir coulisser dans la direction de son axe central (51) avec le disque de retenue (40), un aimant annulaire multi-pôles (46), et en ce qu'en-dehors du réservoir (1) est disposé un aimant annulaire (49), pouvant tourner autour de l'axe central commun (51), mais non coulissant dans la direction longitudinale de cet axe.

10. Appareil selon la revendication 9, caractérisé en ce que le disque de retenue (40) peut coulisser par rapport au canal d'alimentation (23), uniquement dans la direction longitudinale de ce canal.

11. Appareil selon la revendication 9, caractérisé en ce que l'entrainement de disque de retenue (44) est réalisé sous la forme d'une unité d'entrainement à piston et cylindre (54) raccordée à la conduite d'air (24) et dont le piston (56) est sollicité, sur un côté, par la pression dans la conduite d'air (24), et sur l'autre côté par un ressort de rappel (58).

12. Appareil selon la revendication 11, caractérisé en ce que le piston (56) de l'unité d'entrainement à piston et cylindre (54) est relié, par l'intermédiaire de sa tige de piston (53) et d'un levier de pivotement (52), à l'aimant annulaire (49) situé à l'extérieur du réservoir (1).

13. Appareil selon la revendication 9, caractérisé en ce que les aimants annulaires (46, 49) sont des aimants à quatre pôles.

FIG.1

EP 0 281 732 B1

# FIG. 2

# FIG. 3

# FIG. 4